# EUROPÄISCHE PATENTSCHRIFT

(11) **EP 1 284 927 B1**
(45) Veröffentlichungstag und Bekanntmachung des Hinweises auf die Patenterteilung: **15.12.2004**
(21) Anmeldenummer: 01943337.4
(22) Anmeldetag: 10.05.2001
(51) Int. Cl.: C01B 21/26, B01D 53/56, B01D 53/86, B01D 35/04

(54) **VERFAHREN UND VORRICHTUNG ZUR REDUZIERUNG VON DISTICKSTOFFOXID**
METHOD AND DEVICE FOR THE REDUCTION OF NITROGEN PROTOXIDE
PROCEDE ET DISPOSITIF DE REDUCTION DE PROTOXYDE D'AZOTE

(30) Priorität: 15.05.2000 DE 10023567
(43) Veröffentlichungstag der Anmeldung: 26.02.2003
(73) Patentinhaber: W.C. Heraeus GmbH, D-63450 Hanau (DE)
(72) Erfinder: GORYWODA, Marek, 63452 Hanau (DE); LUPTON, David, Francis, 63571 Gelnhausen (DE); LUND, Jonathan, 65779 Kelkheim (DE)
(74) Vertreter: Kühn, Hans-Christian
(86) Internationale Anmeldenummer: PCT/EP2001/005297
(87) Internationale Veröffentlichungsnummer: WO 2001/087771

(56) Entgegenhaltungen:
- DE-A- 19 819 882
- US-A- 3 873 675

## Beschreibung

Die Erfindung betrifft ein Verfahren und eine Vorrichtung zur Reduzierung von Distickstoffoxid, das bei der katalytischen Verbrennung von Ammoniak und Sauerstoff zu Stickstoffoxiden gebildet wird, wobei ein aus mindestens einem ersten Katalysatometz und mindestens einem zweiten Katalysatometz bestehendes Katalysatorsystem zur katalytischen Verbrennung von Ammoniak und Sauerstoff zu Stickstoffoxiden verwendet wird und wobei mindestens ein erstes Katalysatometz ein Platinrhodiumnetz ist.

Ein allgemein bekanntes Problem bei der Herstellung von Salpetersäure durch Verbrennung von Ammoniak mittels Sauerstoff unter Bildung von geeigneten Stickstoffoxiden ist die Tatsache, dass dabei Distickstoffoxid (Lachgas) gebildet wird, das bezüglich der Zerstörung der terrestrischen Ozonschicht im Verdacht steht, beim Abbau dieser daran beteiligt zu sein. Es ist bei der Salpetersäureherstellung daher ausgesprochen wichtig, das erzeugte N₂O nachträglich wirksam zu zerstören oder aber die Bildung des Lachgases weitestgehend zu vermeiden. Hierbei sollte die Ausbeute an gewünschten Stickstoffoxiden nicht beeinträchtigt werden.

In DE 198 19 882 A1 wird ein Verfahren zur katalystischen Zersetzung von N₂O in einem bei der Herstellung von Salpetersäure durch katalytische Oxidation von Ammoniak erhaltenen Gasgemisch an einem Katalysator zur Zersetzung von N₂O offenbart, dass dadurch gekennzeichnet ist, dass das aus der katalytischen Oxidation von Ammoniak erhaltene heiße Gasgemisch vor einer nachfolgenden Abkühlung mit Katalysator zur Zersetzung von N₂O kontaktiert wird.

DE-OS 22 39 514 offenbart eine Anordnung von Katalysatorgazen zur Beschleunigung einer Reaktion zwischen zwei oder mehreren durch die Gaze hinduchströmenden Gasen, das dadurch gekennzeichnet ist, dass an der Seite nach unten gerichteter Strömung einer Gazegruppe aus kostbarem metallischen Material an eine zweite Gazegruppe aus nicht kostbarem metallischen Material und weniger leicht verdampfendem sowie durch die Gase abführbarem metallischen Material angeordnet ist, welches im Betrieb die Beschleunigung der Reaktion unterstützt.

In DE-OS 19 59 137 ist ein Katalysator mit einem an Platin und Rhodium erniedrigten Gehaltvon 12 bis 20 Gewichts-% zur Oxidation von Ammoniak zu Stickstoffoxid offenbart.

In Hollemann-Wiberg "Lehrbuch der anorganischen Chemie", 71. - 80. Auflage, Verlag Walter de Gruyter & Co., Berlin, 1971, Seite 360, ist ein Ammoniakverbrennungselement zur Stickoxidgewinnung mit Platinnetzkatalysator und größere Anlagen mit mehreren übereinander angeordneten Drahtnetzen je Verbrennungselement offenbart.

In EP 0 359 286 B1 wird ein Verfahren zur Reduzierung von Distickstoffoxid offenbart, das bei der katalytischen Verbrennung von Ammoniak und Sauerstoff zu Stickstoffoxiden gebildet und daraufhin in einer Wärmerückgewinnungseinheit abgekühlt und in Wasser und/oder verdünnter Salpetersäure absorbiert wird, das dadurch gekennzeichnet ist, dass den warmen Verbrennungsgasen eine Retentionszeit von 0,1 bis 3 Sekunden gegeben wird, bevor sie abgekühlt werden. Hierdurch ist es möglich, das gebildete N₂O bis zu 90 % wieder zu zersetzen.

In EP 0 611 041 B1 ist ein Verfahren zur Abschwächung der N₂O-Emissionen während der Inbetriebnahmephase einer Ammoniakoxidationsreaktion offenbart, unter Verwendung eines Katalysatornetzes auf Platinbasis und unter Einbeziehung eines Platinauffangnetzes, das Fasern einer Palladiumlegierung umfasst, wobei die Palladiumlegierung 0,1 bis 5 Gewichts-% Kobalt enthält.

In DE 198 05 202 A1 wird ein Verfahren zur Herstellung von Salpetersäure beschrieben, bei dem Ammoniak an mindestens einem Katalysatornetz, insbesondere Platinnetz, unter Zufuhr von Sauerstoff verbrannt wird und die Reaktionsgase gekühlt werden, wobei die Reaktionsgase stromab des Katalysatornetzes vor der Kühlung über einen temperaturstabilen Katalysator für die Umwandlung des in den Reaktionsgasen enthaltenen N₂O geführt werden.

Die oben aufgezeigten Verfahren weisen entweder unzureichende N₂O-Abbauraten oder aber einen apparativ sehr hohen Aufwand auf, der in wirtschaftlicher Hinsicht als nachteilig anzusehen ist.

Es ergibt sich daher das Problem, mit Hilfe eines neuartigen Verfahrens und einer neuartigen Vorrichtung zur Reduzierung von Distickstoffoxid, die oben genannten Nachteile zumindest teilweise zu beseitigen, insbesondere ein effizientes und vom apparativen Aufwand her kostengünstiges Verfahren und eine entsprechende Apparatur bereitzustellen.

Dieses Problem wird erfindungsgemäß durch ein Verfahren nach Anspruch 1 oder 2 und durch eine Vorrichtung nach Anspruch 6 oder 7 sowie durch eine Verwendung nach Anspruch 11 gelöst.

Sowohl beim erfindungsgemäßen Verfahren als auch bei der entsprechenden erfindungsgemäßen Vorrichtung wird Ammoniak mit Sauerstoff vermischt und bei einer Temperatur von ca. 860 °C durch Vorbeileiten an einem ersten Katalysatornetz, das ein Platinrhodiumnetz mit typischerweise 5,0 bis 10,0 Gewichts-% Rhodium ist, und durch Vorbeileiten an einem zweiten Katalysatometz verbrannt, wobei dieses zweite ein Palladiumrhodiumnetz mit mindestens 92 Gewichts-% (oder mehr) Palladium, 2 bis 4 Gewichts-% Rhodium, Rest Platin oder alternativ mit 82 bis 83 Gewichts-% Palladium, 2,5 bis 3,5 Gewichts-% Rhodium, Rest Platin ist, und dabei eine hocheffiziente Reduzierung des Distickstoffoxidanteils bewerkstelligt. Als Netz wird ein gasdurchlässiges Gebilde bezeichnet, das im wesentlichen metallisch ist und beispielsweise durch Wirken, Stricken, Weben oder Vlieslegen hergestellt wird.

Überraschenderweise konnte gezeigt werden, dass durch die gleichzeitige Verwendung der beiden erfindungsgemäßen Katalysatornetze, die gebildete N₂O-Menge von vornherein erheblich reduziert werden konnte, wobei gleichzeitig eine hocheffiziente NO-Erzeugung stattfand.

Zunächst ist es vorteilhaft, dass das Palladiumrhodiumnetz einen Rhodiumgehalt von 2,5 bis 3 Gewichts-% und einen Palladiumgehalt von 82,5 Gewichts-% aufweist, da hiermit eine besonders niedrige N₂O-Bildung erreicht werden kann.

Weiterhin ist es vorteilhaft, dass das Palladiumrhodiumnetz vom Platinrhodiumnetz mittels mindestens eines dritten Netzes beabstandet wird, um auf diese Art und Weise eine Verschweißung der unterschiedlichen Netztypen zu vermeiden, wobei als Material für das dritte Netz hitzebeständiger Stahl (FeCrAl-Legierung z. B. Megapyr oder Kanthal) sich bewährt hat.

Schliesslich kann es vorteilhaft sein, dass das Palladiumrhodiumnetz mindestens ein weiteres Metall aus der Gruppe Iridium, Ruthenium, Rhenium, Cobalt, Nickel, Kupfer, Gold enthält, um die mechanische Stabilität - bei gleichbleibender katalytischer Funktion - der Palladiumrhodiumkatalysatornetze zu erhöhen.

Die nachfolgenden Beispiele dienen zur Erläuterung der Erfindung:

### 1. Versuche im Testreaktor:

| Anlagendaten: | |
|---|---|
| Reaktor | Testreaktor mit effektivem Durchmesser von 100 mm |
| Reaktordruck | 5 bar |
| Belastung | 10 tN/m²Tag |
| Temperatur | 865°C |
| Laufzeit | 20 Tage |

| Beispiel 1 (Standardsystem) | PtRh8 Netze + PdNi5 Netze |
|---|---|
| Umsetzungsselektivität von Ammoniak zu Stickoxyd | 95.5 - 96% |
| N₂O-Ausstoß | 1000 - 1200 ppm |

| Beispiel 2 (Vergleichsbeispiel) | PtRh8 Netze + PdRh1.5 Netze |
|---|---|
| Umsetzungsselektivität von Ammoniak zu Stickoxyd | 95.5 - 96% |
| N₂O-Ausstoß | 1000 - 1200 ppm |

| Beispiel 3 (Vergleichsbeispiel) | PtRh8 Netze + PdRh5 Netze |
|---|---|
| Umsetzungsselektivität von Ammoniak zu Stickoxyd | 94,5 - 95% |
| N₂O-Ausstoß | 900 - 1200 ppm |

| Beispiel 4 (Erfindung) | PtRh8 Netze + PdRh3 Netze |
|---|---|
| Umsetzungsselektivität von Ammoniak zu Stickoxyd | 95.5 - 96% |
| N₂O-Ausstoß | 300 - 500 ppm |
| Bemerkung | |
| Pd-Netze nach Einsatz mechanisch sehr schwach: Risse vorhanden | |

| Beispiel 5 (Erfindung) | PtRh8 Netze + PdRh3Pt5 Netze |
|---|---|
| Umsetzungsselektivität von Ammoniak zu Stickoxyd | 95.5 - 96% |
| N₂O-Ausstoß | 300 - 500 ppm |
| Bemerkung | |
| Pd-Netze nach Einsatz mechanisch schwach aber keine Risse vorhanden | |

| Beispiel 6 (Erfindung) | PtRh8 Netze + PdRh3Pt15 Netze |
|---|---|
| Umsetzungsselektivität von Ammoniak zu Stickoxyd | 95.5 - 96% |
| N₂O-Ausstoß | 300 - 500 ppm |

### Bemerkung:

Pd-Netze nach Einsatz mechanisch stabil und keine Risse vorhanden.

### 2.1. Versuche im Industriereaktor:

| Anlagendaten: | |
|---|---|
| Reaktor | Industrieanlage mit zwei parallelen Reaktoren |
| Reaktordruck | 4.8 |
| Belastung | 11.2 tN/m²Tag |
| Temperatur | 880°C |
| Laufzeit | 180 Tage |

| Reaktor 1 (Standardsystem) | PtRh5 Netze + PdNi5 Netze |
|---|---|
| Umsetzung von Ammoniak in Stickoxyd | 95 % |
| N₂O-Ausstoß | 1500 ppm |

| Reaktor 2 (Erfindung) | PtRh5 Netze + PdPt15Rh2,5 Netze |
|---|---|
| Umsetzung von Ammoniak in Stickoxyd | 95 % |
| N₂O-Ausstoß | 1000 ppm |

### 2.2. Versuche im Industriereaktor:

| Anlagendaten: | |
|---|---|
| Reaktor | Industriereaktor |
| Reaktordruck | 3.5 bar |
| Belastung | 5.85 tN/m²Tag |
| Temperatur | 860°C |
| Laufzeit | 300 Tage |

| Beispiel 1 (Standardsystem) | PtRh5 Netze + PdNi5 Netze |
|---|---|
| Umsetzung von Ammoniak in Stickoxyd | 94 - 96 % |
| N₂O-Ausstoß | 1200 - 1600 ppm |

| Beispiel 2 (Erfindung) | PtRh5 Netze + PdPt15Rh3 Netze |
|---|---|
| Umsetzung von Ammoniak in Stickoxyd | 94 - 96 % |
| N₂O-Ausstoß | 400 - 800 ppm. |

## Patentansprüche

1. Verfahren zur Reduzierung von Distickstoffoxid, das bei der katalytischen Verbrennung von Ammoniak und Sauerstoff zu Stickstoffoxiden gebildet wird, wobei ein aus mindestens einem ersten Katalysatometz und mindestens einem zweiten Katalysatornetz bestehendes Katalysatorsystem zur katalytischen Verbrennung von Ammoniak und Sauerstoff zu Stickstoffoxiden verwendet wird und wobei das mindestens eine erste Katalysatornetz ein Platinrhodiumnetz ist, **dadurch gekennzeichnet, dass** das mindestens eine zweite und stromabwärtige Katalysatometz ein Palladiumrhodiumnetz mit mindestens 92 Gewichts-% Palladium, 2 bis 4 Gewichts-% Rhodium, Rest Platin ist.

2. Verfahren zur Reduzierung von Distickstoffoxid, das bei der katalytischen Verbrennung von Ammoniak und Sauerstoff zu Stickstoffoxiden gebildet wird, wobei ein aus mindestens einem ersten Katalysatornetz und mindestens einem zweiten Katalysatometz bestehendes Katalysatorsystem zur katalytischen Verbrennung von Ammoniak und Sauerstoff zu Stickstoffoxiden verwendet wird und wobei das mindestens eine erste Katalysatornetz ein Platinrhodiumnetz ist, **dadurch gekennzeichnet, dass** das mindestens eine zweite und stromabwärtige Katalysatometz ein Palladiumrhodiumnetz mit 82 bis 83 Gewichts-% Palladium, 2,5 bis 3,5 Gewichts-% Rhodium, Rest Platin ist.

3. Verfahren nach Anspruch 2, **dadurch gekennzeichnet, dass** das Palladiumrhodiumnetz einen Rhodiumgehalt von 2,5 bis 3 Gewichts-% und einen Palladium-Gehalt von 82,5 Gewichts-% aufweist.

4. Verfahren nach einem der Ansprüche 1 bis 3, **dadurch gekennzeichnet, dass** das Palladiumrhodiumnetz vom Platinrhodiumnetz mittels mindestens eines dritten Netzes beabstandet wird.

5. Verfahren nach Anspruch 4, **dadurch gekennzeichnet, dass** das dritte Netz aus einem hitzebeständigen Stahl besteht.

6. Vorrichtung zur Reduzierung von Distickstoffoxid, das bei der katalytischen Verbrennung von Ammoniak und Sauerstoff zu Stickstoffoxiden gebildet wird, wobei ein aus mindestens einem ersten Katalysatornetz und mindestens einem zweiten Katalysatometz bestehendes Katalysatorsystem zur katalytischen Verbrennung von Ammoniak und Sauerstoff zu Stickstoffoxiden verwendet wird und wobei das mindestens eine erste Katalysatornetz ein Platinrhodiumnetz, **dadurch gekennzeichnet, dass** das zweite und stromabwärtige Katalysatornetz ein Palladiumrhodiumnetz mit mindestens 92 Gewichts-% Palladium, 2 bis 4 Gewichts-% Rhodium, Rest Platin ist.

7. Vorrichtung zur Reduzierung von Distickstoffoxid, das bei der katalytischen Verbrennung von Ammoniak und Sauerstoff zu Stickstoffoxiden gebildet wird, wobei ein aus mindestens einem ersten Katalysatometz und mindestens einem zweiten Katalysatornetz bestehendes Katalysatorsystem zur katalytischen Verbrennung von Ammoniak und Sauerstoff zu Stickstoffoxiden verwendet wird und wobei das mindestens eine erste Katalysatornetz ein Platinrhodiumnetz, **dadurch gekennzeichnet, dass** das zweite und stromabwärtige Katalysatornetz ein Palladiumrhodiumnetz mit 82 bis 83 Gewichts-% Palladium, 2,5 bis 3,5 Gewichts-% Rhodium, Rest Platin ist.

8. Vorrichtung nach Anspruch 7, **dadurch gekennzeichnet, dass** das Palladiumrhodiumnetz einen Rhodiumgehalt von 2,5 bis 3 Gewichts-% und einen Palladium-Gehalt von 82,5 Gewichts-% aufweist.

9. Vorrichtung nach einem der Ansprüche 6 bis 8, **dadurch gekennzeichnet, dass** das Palladiumrhodiumnetz vom Platinrhodiumnetz mittels mindestens eines dritten Netzes beabstandet wird.

10. Vorrichtung nach einem der Ansprüche 6 bis 9, **dadurch gekennzeichnet, dass** das dritte Netz aus einem hitzebeständigen Stahl besteht.

11. Verwendung einer Vorrichtung nach einem der Ansprüche 6 bis 10 zur Reduzierung von Distickstoffoxid, insbesondere bei der katalytischen Verbrennung von Ammoniak und Sauerstoff zu Stickstoffoxiden.

## Claims

1. Process for reducing nitrous oxide which is formed during the catalytic combustion of ammonia and oxygen to give oxides of nitrogen, a catalyst system consisting of at least one first catalyst net and at least one second catalyst net being used for the catalytic combustion of ammonia and oxygen to give oxides of nitrogen, and the at least one first catalyst net being a platinum-rhodium net, **characterized in that** the at least one second, downstream catalyst net being a palladium-rhodium net comprising at least 92% by weight of palladium and 2 to 4% by weight of rhodium, the remainder being platinum.

2. Process for reducing nitrous oxide which is formed during the catalytic combustion of ammonia and oxygen to give oxides of nitrogen, a catalyst system consisting of at least one first catalyst net and at least one second catalyst net being used for the catalytic combustion of ammonia and oxygen to give oxides of nitrogen, and the at least one first catalyst net being a platinum-rhodium net, **characterized in that** the at least one second, downstream catalyst net is a palladium-rhodium net comprising 82 to 83% by weight of palladium and 2.5 to 3.5% by weight of rhodium, the remainder being platinum.

3. Process according to Claim 2, **characterized in that** the palladium-rhodium net has a rhodium content of 2.5 to 3% by weight and a palladium content of 82.5% by weight.

4. Process according to any of Claims 1 to 3, **characterized in that** the palladium-rhodium net is separated from the platinum-rhodium net by means of at least one third net.

5. Process according to Claim 4, **characterized in that** the third net consists of a heat-resistant steel.

6. Apparatus for reducing nitrous oxide which is formed during the catalytic combustion of ammonia and oxygen to give oxides of nitrogen, a catalyst system consisting of at least one first catalyst net and at least one second catalyst net being used for the catalytic combustion of ammonia and oxygen to give oxides of nitrogen, and the at least one first catalyst net being a platinum-rhodium net, **characterized in that** the second, downstream catalyst net is a palladium-rhodium net comprising at least 92% by weight of palladium and 2 to 4% by weight of rhodium, the remainder being platinum.

7. Apparatus for reducing nitrous oxide which is formed during the catalytic combustion of ammonia and oxygen to give oxides of nitrogen, a catalyst system consisting of at least one first catalyst net and at least one second catalyst net being used for the catalytic combustion of ammonia and oxygen to give oxides of nitrogen, and the at least one first catalyst net being a platinum-rhodium net, **characterized in that** the second, downstream catalyst net is a palladium-rhodium net comprising 82 to 83% by weight of palladium and 2.5 to 3.5% by weight of rhodium, the remainder being platinum.

8. Apparatus according to Claim 7, **characterized in that** the palladium-rhodium net has a rhodium content of 2.5 to 3% by weight and a palladium content of 82.5% by weight.

9. Apparatus according to any of Claims 6 to 8, **characterized in that** the palladium-rhodium net is separated from the platinum-rhodium net by means of at least one third net.

10. Apparatus according to any of Claims 6 to 9, **characterized in that** the third net consists of a heat-resistant steel.

11. Use of an apparatus according to any of Claims 6 to 10 for reducing nitrous oxide, in particular during the catalytic combustion of ammonia and oxygen to give oxides of nitrogen.

## Revendications

1. Procédé de réduction de l'oxyde de diazote qui est formé lors de la combustion catalytique de l'ammoniac et de l'oxygène en oxydes d'azote, où un système catalytique consistant en au moins une première toile catalytique et au moins une deuxième toile catalytique est utilisé pour la combustion catalytique de l'ammoniac et de l'oxygène en oxydes d'azote et où la ou les premières toiles catalytiques est ou sont une toile de platine-rhodium, **caractérisé en ce que** la ou les deuxièmes toiles catalytiques en aval est ou sont une toile de palladium-rhodium avec au moins 92 % en poids de palladium, 2 à 4 % en poids de rhodium, le reste étant du platine.

2. Procédé de réduction de l'oxyde de diazote qui est formé lors de la combustion catalytique de l'ammoniac et de l'oxygène en oxydes d'azote, où un système catalytique consistant en au moins une première toile catalytique et au moins une deuxième toile catalytique est utilisé pour la combustion catalytique de l'ammoniac et de l'oxygène en oxydes d'azote et où la ou les premières toiles catalytiques est ou sont une toile de platine-rhodium, **caractérisé en ce que** la ou les deuxièmes toiles catalytiques en aval est ou sont une toile de palladium-rhodium avec 82 à 83 % en poids de palladium, 2,5 à 3,5 % en poids de rhodium, le reste étant du platine.

3. Procédé selon la revendication 2 **caractérisé en ce que** la toile de palladium-rhodium présente une teneur en rhodium de 2,5 à 3 % en poids et une teneur en palladium de 82,5 % en poids.

4. Procédé selon l'une des revendications 1 à 3 **caractérisé en ce que** la toile de palladium-rhodium est séparée de la toile de platine-rhodium au moyen d'au moins une troisième toile.

5. Procédé selon la revendication 4 **caractérisé en ce que** la troisième toile consiste en un acier résistant à la chaleur.

6. Dispositif de réduction de l'oxyde de diazote qui est formé lors de la combustion catalytique de l'ammoniac et de l'oxygène en oxydes d'azote, où un système catalytique consistant en au moins une première toile catalytique et au moins une deuxième toile catalytique est utilisé pour la combustion catalytique de l'ammoniac et de l'oxygène en oxydes d'azote et où la ou les premières toiles catalytiques est ou sont une toile de platine-rhodium, **caractérisé en ce que** la deuxième toile catalytique en aval est une toile de palladium-rhodium avec au moins 92 % en poids de palladium, 2 à 4 % en poids de rhodium, le reste étant du platine.

7. Dispositif de réduction de l'oxyde de diazote qui est formé lors de la combustion catalytique de l'ammoniac et de l'oxygène en oxydes d'azote, où un système catalytique consistant en au moins une première toile catalytique et au moins une deuxième toile catalytique est utilisé pour la combustion catalytique de l'ammoniac et de l'oxygène en oxydes d'azote et où la ou les premières toiles catalytiques est ou sont une toile de platine-rhodium, **caractérisé en ce que** la deuxième toile catalytique en aval est une toile de palladium-rhodium avec 82 à 83 % en poids de palladium, 2,5 à 3,5 % en poids de rhodium, le reste étant du platine.

8. Dispositif selon la revendication 7 **caractérisé en ce que** la toile de palladium-rhodium présente une teneur en rhodium de 2,5 à 3 % en poids et une teneur en palladium de 82,5 % en poids.

9. Dispositif selon l'une des revendications 6 à 8 **caractérisé en ce que** la toile de palladium-rhodium est séparée de la toile de platine-rhodium au moyen d'au moins une troisième toile.

10. Dispositif selon l'une des revendications 6 à 9 **caractérisé en ce que** la troisième toile consiste en un acier résistant à la chaleur.

11. Utilisation d'un dispositif selon l'une des revendications 6 à 10 pour la réduction de l'oxyde de diazote en particulier lors de la combustion catalytique de l'ammoniac et de l'oxygène en oxydes d'azote.
